# EUROPÄISCHE PATENTANMELDUNG

(11) **EP 2 151 479 A1**
(43) Veröffentlichungstag der Anmeldung: **10.02.2010**
(21) Anmeldenummer: 08013752.4
(22) Anmeldetag: 31.07.2008
(51) Int. Cl.: C08L 83/04, C08G 77/38, C08L 101/00

(54) **Polyorganosiloxane und deren Verwendung bei der Verarbeitung und Vulkanisation von Kautschuk**

(71) Anmelder: Schill + Seilacher "Struktol" Aktiengesellschaft, 22113 Hamburg (DE)
(72) Erfinder: Dittrich, Uwe, Dr., 01445 Radebeul (DE); Börger, Volker, Dr., 22769 Hamburg (DE); Thümmler, Gisela, 01239 Dresden (DE)
(74) Vertreter: UEXKÜLL & STOLBERG

(57) **Zusammenfassung**

Die Erfindung betrifft Polyorganosiloxane mit 3 oder mehr Siloxaneinheiten, die
(i) mindestens einen organischen Anteil R¹, wobei R¹ mindestens eine Kohlenstoff-Kohlenstoff-Mehrfachbindung aufweist, und
(ii) mindestens einen Kohlenwasserstoffanteil R² aufweisen, wobei R² eine Kettenlänge von 5 bis 50 Kohlenstoffatomen besitzt.

Die Polyorganosiloxane werden bei der Verarbeitung und Vulkanisation von Kautschuk eingesetzt und reaktiv in diesen eingebunden. Sie ergeben eine Senkung der Viskosität des Kautschuks bei der Verarbeitung und gegebenenfalls eine Verbesserung der mechanischen Eigenschaften des vulkanisierten Kautschuks.

## Beschreibung

Die vorliegende Erfindung betrifft neuartige Polyorganosiloxane sowie deren Verwendung als Additiv bei der Verarbeitung von Kautschuk. Das Polyorganosiloxan kann als Masterbatch oder als Abmischung eingesetzt werden. Ferner betrifft die Erfindung ein Verfahren zur Vulkanisation von Kautschuk sowie einen vulkanisierten Kautschuk (Vulkanisat).

Verschiedene Kautschuktypen und Kautschukmischungen lassen sich aufgrund ihrer hohen Viskosität bzw. ihrer Tendenz, auf dem Walzwerk oder im Innenmischer zu stark zu haften, nur schlecht verarbeiten. Beispielsweise kann es bei einer Spritzgussverarbeitung vorkommen, dass nicht alle Kavitäten einer Form ausgefüllt werden, was eine hohe Ausschussrate zur Folge hat. Aus diesem Grunde werden dem Kautschuk als Additive sogenannte Fließverbesserer (Viskositätssenkungsmittel) zugesetzt.

Beispielsweise ist es üblich, Fettsäurederivate, Wachse oder Silikonverbindungen als Fließverbesserer zuzugeben.

Durch die Verwendung von Fließverbesserern wird wie gewünscht die Viskosität des Kautschuks bei der Verarbeitung gesenkt. Allerdings wird der Kautschuk durch die Zugabe des Fließverbesserers auch verdünnt. Dies hat zur Folge, dass sich die mechanischen Eigenschaften des vulkanisierten Kautschuks im Vergleich mit einem ohne Fließverbesserer vulkanisierten Kautschuk in der Regel verschlechtern. Außerdem wird bei Zusatz von Fließverbesserern in bestimmten Fällen, insbesondere bei hohen Additiv-Konzentrationen, in dem erhaltenen Vulkanisat das Auftreten von zumeist unerwünschten Ausblühungen beobachtet.

Ferner ist bekannt, dass sich die gewünschten mechanischen Eigenschaften (wie Druckverformungsrest, Modul und Reißfestigkeit) von Kautschuk durch Vulkanisation verbessern bzw. überhaupt erst erzielen lassen. Die Vulkanisation vernetzt die langkettigen Kautschukmoleküle, und aus dem Rohkautschuk mit plastischen Eigenschaften bildet sich vulkanisierter Kautschuk mit elastischen Eigenschaften (Vulkanisat). Ein Kautschuk kann auf vielfältige Weise vernetzt werden. Beispielsweise können für die Vernetzung Schwefel in Verbindung mit den bekannten Beschleunigersystemen oder organische Peroxide wie beispielsweise Bis(1-methyl-1-phenylethyl)peroxid (Dicumylperoxid) benutzt werden. Die peroxidische Vernetzung ist in bestimmten Fällen bevorzugt, da ausgewählte mechanische Werte, wie beispielsweise der Druckverformungsrest, im Vergleich zur Schwefel-Vulkanisation verbessert werden. Insbesondere ist die thermische Beständigkeit (Alterungsresistenz) des mit peroxidischer Vulkanisation erhaltenen Vulkanisats einem Vulkanisat, das mit Schwefel vernetzt wurde, deutlich überlegen. Der Grund dafür ist die höhere Dissoziationsenergie von Kohlenstoff-Kohlenstoff-Bindungen im Vergleich zu Kohlenstoff-Schwefel- bzw. Schwefel-Schwefel-Bindungen.

In der vorliegenden Beschreibung wird der Begriff "Kautschukmischung" synonym mit dem Begriff "Kautschuk" verwendet, weil häufig Mischungen von verschiedenen Kautschuktypen eingesetzt werden.

Viele Kautschuke wie beispielsweise Naturkautschuk (NR) und Ethylen-Propylen-Dienmonomer-Kautschuk (EPDM) lassen sich sowohl mit Schwefel als auch mit Peroxiden vulkanisieren. Andere Kautschuke wiederum wie beispielsweise Ethylen-AcrylatKautschuk (AEM) lassen sich mit verschiedenen Vulkanisationssystemen (Diaminen, Peroxiden), jedoch nicht mit Schwefel vulkanisieren.

Für Anwendungen, die eine hohe Oxidationsresistenz verlangen, wird bevorzugt Kautschuk ohne ungesättigte Funktionalitäten (zum Beispiel Doppelbindungen) in der Molekülkette eingesetzt. Kautschuk ohne ungesättigte Funktionalitäten ist nicht mit Schwefel vulkanisierbar und wird typischerweise mit Peroxiden vernetzt.

Der Grad der bei der peroxidischen Vulkanisation erreichbaren Vernetzung hängt von mehreren Faktoren ab und ist in bestimmten Fällen nicht ausreichend, so dass vorzugsweise Vernetzungshilfsmittel (Coagenzien) zugegeben werden. Mittels solcher Coagenzien wird die Vernetzungsdichte erhöht und damit im Vergleich mit einer Vulkanisation ohne Vernetzungshilfsmittel eine weitere Verbesserung der mechanischen Werte erreicht. Bekannte Vertreter zur Vernetzung von Kautschuken durch peroxidische Vulkanisation sind Triallylcyanurat (TAC), Triallylisocyanurat (TAIC), Trimethylolpropantrimethacrylat (TMPTMA), Ethylenglycoldimethacrylat (EDMA), 1,6-Hexandioldiacrylat (HDDA) oder N,N'-m-Phenylenbismaleimid (MPBM).

Es ist möglich, der bei der Verwendung von Fließverbesserern möglichen, unerwünschten Verschlechterung der mechanischen Eigenschaften des Vulkanisats durch Verwendung einer besonders hohen Menge Coagenzien entgegenzuwirken. Eine solche Zugabe von Coagenzien führt zu einer Kompensation des Verdünnungseffektes des Fließverbesserers. Jedoch wird durch die Verwendung von Coagenzien in der Regel kein Beitrag zur Absenkung der Mooney-Viskosität geleistet, sondern der Kautschukmischung nur ein weiterer Bestandteil zugefügt. Die schlechte Löslichkeit polarer Coagenzien in unpolaren Kautschuken kann außerdem zu Inhomogenitäten im zu bildenen Netzwerk führen. Dieser Effekt ist bei höheren Dosierungen entsprechend ausgeprägter.

Dem Kautschukverarbeiter/Gummihersteller sind also enge Grenzen gesetzt: Einerseits muss der Kautschuk gut verarbeitbar sein und soll deshalb Fließverbesserer enthalten, andererseits sollen sich die mechanischen Eigenschaften des vulkanisierten Kautschuks durch Zugabe des Fließverbesserers nicht unerwünscht verschlechtern. Darüber hinaus ist in den meisten Fällen unerwünscht, dass die zugegebenen Fließverbesserer durch Ausblühungen an die Oberfläche der Kautschukmischung bzw. des Vulkanisats gelangen. Der Erhalt der mechanischen Eigenschaften macht die Zugabe von (vergleichsweise großen Mengen) Coagenzien notwendig, was wie erwähnt ebenfalls nachteilig sein kann.

Die EP 0 247 501 B1 betrifft ein Verfahren zur Herstellung von Methacryloxy- oder Acryloxy-haltigen Organosilanen und Organosiloxanen. Offenbart wird die Herstellung von γ-Methacryloxypropyltrimethoxysilan. Eine Verwendung der Produkte wird nicht gelehrt.

Aufgabe der vorliegenden Erfindung war es, Verbindungen bereitzustellen, mit deren Hilfe die Viskosität von Kautschuk bei der Verarbeitung verbessert werden kann, ohne dass sich die mechanischen Eigenschaften des erhaltenen Vulkanisats verschlechtern (beispielsweise der Modul sinkt). Vorzugsweise sollten Verbindungen zur Verfügung gestellt werden, die sowohl eine Senkung der Viskosität der Kautschukmischung bei der Verarbeitung als auch eine Verbesserung der mechanischen Eigenschaften des nach der Vulkanisation erhaltenen Vulkanisats bewirken.

Erfindungsgemäß wurde überraschend gefunden, dass diese Aufgabe durch die Verwendung von bestimmten Polyorganosiloxanen als Additiv bei der Verarbeitung von Kautschuk gelöst wird.

Die erfindungsgemäßen Polyorganosiloxane zeichnen sich dadurch aus, dass sie 3 oder mehr Siloxaneinheiten und
(i) einen oder mehrere organische Anteile R¹, wobei R¹ eine oder mehrere Kohlenstoff-Kohlenstoff-Mehrfachbindungen besitzt, sowie
(ii) einen oder mehrere Kohlenwasserstoffanteile R² aufweisen, wobei R² eine Kettenlänge von 5 bis 50 Kohlenstoffatomen besitzt.

Erfindungsgemäß wird das Polyorganosiloxan bei der (peroxidischen) Vulkanisation reaktiv in den Kautschuk eingebunden, wodurch die Bildung von Ausblühungen an der Oberfläche des vulkanisierten Kautschuks verhindert wird. Durch das erfindungsgemäße Polyorganosiloxan werden die Verarbeitbarkeit und gegebenenfalls auch die Vernetzungsdichte von Kautschuken bei der Vulkanisation verbessert. Vorzugsweise werden sowohl die Verarbeitbarkeit als auch die Vernetzung positiv beeinflusst.

### 1. Organischer Anteil R¹

Erfindungsgemäß eingesetzte Polyorganosiloxane weisen einen oder mehrere organische Anteile R¹ auf, wobei R¹ eine oder mehrere Kohlenstoff-Kohlenstoff-Mehrfachbindungen besitzt.

Es ist bevorzugt, dass die Kohlenstoff-Kohlenstoff-Mehrfachbindung in R¹ eine Kohlenstoff-Kohlenstoff-Doppelbindung ist, beispielsweise in einer Kohlenstoffkette oder einem Ring von Kohlenstoffatomen. In einer bevorzugten Ausführungsform ist der organische Anteil R¹ ein einwertiger Rest.

Als R¹ kommen beispielsweise Cycloalkenyl, Alkenyl, Vinyl, Allyl, Norbornyl, (Di)cyclopentenyl oder von Methacrylat oder Acrylat abgeleitete Gruppen in Frage. Bevorzugte einwertige Reste R¹ sind abgeleitet von Cyclohexen und (Meth)acrylat, die über eine Kohlenwasserstoffkette, die mit ein oder mehreren Heteroatomen wie Sauerstoff oder Schwefel substituiert und/oder von ein oder mehreren Heteroatomen wie Sauerstoff und Schwefel unterbrochen sein kann, an das Grundgerüst des Polyorganosiloxans gebunden sind.

Besonders bevorzugte Beispiele für R¹ sind die folgenden Gruppen

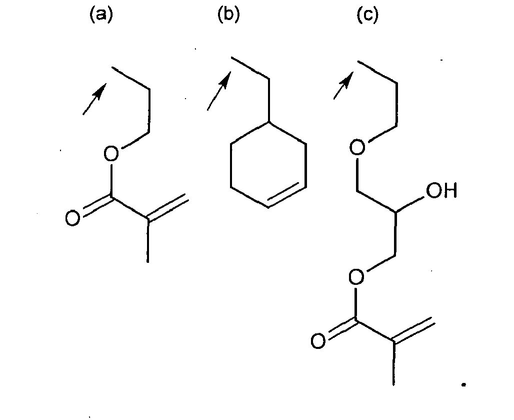

Dabei ist das Kohlenstoffatom, das an das Siliziumatom gebunden ist, jeweils mit einem Pfeil gekennzeichnet.

Diese Funktionalisierungen sind zugänglich durch Umsetzung einer SiH-Einheit mit einer Verbindung, die eine der Hydrosilylierung zugängliche Doppelbindung aufweist, wie beispielsweise:
(a) Allyl(meth)acrylat;
(b) 4-Vinylcyclohexen oder
(c) Allylglycidylether mit anschließender Öffnung des Epoxidrings durch Umsetzung mit Methacrylsäure.

Die Zahl der Kohlenstoffatome zwischen dem Siliziumatom, das die Gruppe R¹ trägt, und der Kohlenstoff-Kohlenstoff-Mehrfachbindung beträgt vorzugsweise 1 bis 10, bevorzugter 2 bis 6, wie beispielsweise 4.

In einer bevorzugten Ausführungsform weist das erfindungsgemäße Polyorganosiloxan eine (oder mehrere) Vinylgruppe(n) auf, die direkt an ein Siliziumatom gebunden ist (sind); in dieser bevorzugten Ausführungsform sind neben der (den) Vinylgruppe(n) noch ein (oder mehrere) andere Anteil(e) R¹ vorhanden. Alternativ ist eine ebenfalls bevorzugte Ausführungsform, bei der das erfindungsgemäße Polyorganosiloxan kein direkt an ein Siliziumatom gebundenes Vinyl aufweist.

In einer bevorzugten Ausführungsform ist R¹ in dem erfindungsgemäßen Polyorganosiloxan als Teil der Struktureinheit I vorhanden

[R¹ₓRₐSiO_{[4-(x+a)]/2}] (I),

wobei x gleich 1, 2 oder 3 und vorzugsweise 1 ist, a gleich 0, 1 oder 2, vorzugsweise 1 oder 2 und insbesondere 1 ist und R ein einwertiger organischer Rest ist. Vorzugsweise ist R ausgewählt aus Methyl, Ethyl, Propyl oder Phenyl, und R besonders bevorzugt Methyl ist.

Bevorzugte Struktureinheiten I mit x = 1 sind eine difunktionelle Struktureinheit I^{D} mit a = 1:

[R¹RSiO_{2/2}] (I^{D}),

und eine monofunktionelle Struktureinheit I^{M} mit a = 2:

[R¹R₂SiO_{1/2}] (I^{M}).

### 2. Kohlenwasserstoffanteil R²

Erfindungsgemäße Polyorganosiloxane weisen einen oder mehrere Kohlenwasserstoffanteile R² auf, wobei R² eine Kettenlänge von 5 bis 50 Kohlenstoffatomen besitzt. Vorzugsweise ist der Kohlenwasserstoffanteil R² ein einwertiger Kohlenwasserstoffrest.

Weiterhin ist bevorzugt, dass der Kohlenwasserstoffanteil des erfindungsgemäßen Polyorganosiloxans keine Kohlenstoff-Kohlenstoff-Mehrfachbindung aufweist.

Ferner ist in allen Ausführungsformen der Erfindung bevorzugt, dass R² ausgewählt ist aus verzweigten oder unverzweigten Alkylgruppen, wie n-C₈- bis C₃₀-Alkyl, vorzugsweise n-C₁₀- bis C₂₆-Alkyl, bevorzugter n-C₁₂- bis C₁₈-Alkyl, wie beispielsweise n-C₁₈-Alkyl.

Vorzugsweise ist der einwertige Kohlenwasserstoffanteil R² in dem Polyorganosiloxan als Teil der Einheit II enthalten

[R²_{y}R'_{b}SiO_{[4-(x+b)]/2}] (II),

wobei y gleich 1, 2 oder 3 und vorzugsweise 1 ist, b gleich 0, 1 oder 2, vorzugsweise 1 oder 2 und insbesondere 1 ist, und R' ein einwertiger organischer Rest ist. Dabei ist bevorzugt, dass R' ausgewählt ist aus Methyl, Ethyl, Propyl oder Phenyl, wobei R' besonders bevorzugt Methyl ist.

Bevorzugte Struktureinheiten II mit x = 1 sind eine difunktionelle Struktureinheit II^{D} mit b = 1:

[R²R'SiO_{2/2}] (II^{D}),

und eine monofunktionelle Struktureinheit II^{M} mit b = 2:

[R²R'₂SiO_{1/2}] (II^{M}).

### 3. Struktur des Polyorganosiloxans

Neben den erwähnten und vorzugsweise vorhandenen Struktureinheiten I und II weisen erfindungsgemäße Polyorganosiloxane vorzugsweise auch die difunktionelle Struktureinheit III^{D} auf:

[R''₂SiO_{2/2}] (III^{D})

wobei die Reste R'' gleich oder verschieden sind (und vorzugsweise gleich sind) und ausgewählt sind aus linearen, verzweigten oder cyclischen organischen Resten, die über ein Sauerstoffatom gebunden sein können, und die Reste R'' vorzugsweise Methyl, Ethyl, Propyl und Phenyl sind, insbesondere Methyl.

Bevorzugt ist (sind) in dem erfindungsgemäßen Polyorganosiloxan auch eine oder - was besonders bevorzugt ist - zwei monofunktionelle Struktureinheiten IV^{M} vorhanden:

[R'''₃SiO_{1/2}] (IV^{M}),

wobei die Reste R"' gleich oder verschieden sind und ausgewählt sind aus Hydroxy und linearen, verzweigten oder cyclischen organischen Resten, die über ein Sauerstoffatom gebunden sein können, und die Reste R"' vorzugsweise Hydroxy, Methyl, Ethyl, Propyl und Phenyl sind, insbesondere Hydroxy und Methyl. In einer besonders bevorzugten Ausführungsform sind die Reste R"' gleich und sind Methylgruppen.

Eine bevorzugte Struktur eines erfindungsgemäßen Polyorganosiloxans ist wie folgt:

[I^{D}]ₘ[I^{M}]ₙ[II^{D}]ₒ[II^{M}]ₚ[III^{D}]_{q}[[IV^{M}]₍₂₋ₙ₋ₚ₎,

wobei
(i) m und o unabhängig voneinander im Bereich von 0 bis 40 liegen und n und p unabhängig voneinander 0, 1 oder 2 sein können,
   - mit der Maßgabe, dass die Summe (m + n) mindestens 1 beträgt und die Summe (o + p) mindestens 1 beträgt,
   - mit der weiteren Maßgabe, dass die Summe (n + p) höchstens 2 ist,
   - wobei die Summe (m + n + o + p) vorzugsweise im Bereich bis 20 liegt, und
(ii) q im Bereich von 0 bis 100 liegt.

Dabei sind die difunktionellen Struktureinheiten I^{D}, II^{D} und III^{D} in dem erfindungsgemäßen Polyorganosiloxan typischerweise und vorzugsweise nicht als Block angeordnet, sondern entlang der Polysiloxankette statistisch verteilt. Für den Fachmann ist außerdem klar, dass die Parameter m, n, o, p und q Durchschnittswerte sind, weil die erfindungsgemäßen Polyorganosiloxane bei der Herstellung typischerweise nicht als einheitliche Verbindungen anfallen.

In einer bevorzugten Ausführungsform ist n gleich Null (0), das heißt die Funktionalisierung R¹ ist in dem Polyorganosiloxan in difunktionellen (brückenständigen) Struktureinheiten I^{D} enthalten. Eine derartige Ausführungsform ist vor allem dann bevorzugt, wenn das erfindungsgemäß eingesetzte Polyorganosiloxan vor allem die Vernetzung des Kautschuks bei der Vulkanisation fördern soll.

In einer weiteren bevorzugten Ausführungsform ist n gleich 1 oder 2 und vorzugsweise 1, das heißt die Funktionalisierung R¹ ist in dem Polyorganosiloxan (zumindest auch) in monofunktionellen (endständigen, terminalen) Struktureinheiten I^{M} enthalten. Eine derartige Ausführungsform ist vor allem dann bevorzugt, wenn das erfindungsgemäß eingesetzte Polyorganosiloxan vornehmlich zur Kettenverlängerung des Kautschuks bei der Vulkanisation dienen soll.

In allen Ausführungsformen der Erfindung ist bevorzugt, dass der Anteil R¹ an ein anderes Siliziumatom gebunden ist als der Anteil R².

In einer bevorzugten Ausführungsform beträgt die Gesamtzahl der Siloxaneinheiten der erfindungsgemäßen Polyorganosiloxane (m + o + q + 2) 10 bis 100, bevorzugter 15 bis 70, insbesondere 20 bis 50, wie 25 bis 40.

In einer weiteren bevorzugten Ausführungsform beträgt die Summe der funktionalisierten Siloxaneinheiten in den erfindungsgemäßen Polyorganosiloxanen (m + n + o + p) 2,5 bis 15, bevorzugter 3 bis 10.

Bevorzugte Verhältnisse der Funktionalisierungen mit R¹ und R² in difunktionellen Siloxaneinheiten I^{D} und II^{D} betragen (das heißt m/o beträgt) 10/90 bis 99/1, bevorzugter 30/70 bis 98/2, insbesondere 50/50 bis 97/3, wie 70/30 bis 96/4 oder 75/25 bis 95/5.

Die Zahl der unsubstituierten difunktionellen Siloxaneinheiten III^{D} (q) in den erfindungsgemäßen Polyorganosiloxanen beträgt vorzugsweise 5 bis 60, bevorzugter 10 bis 50, insbesondere 15 bis 40, wie 20 bis 30.

Letztendlich ist erfindungsgemäß möglich, dass das Polyorganosiloxan den einwertigen organischen Rest R⁵ aufweist, der sowohl mindestens einen Anteil R¹ als auch mindestens einen Anteil R² aufweist. Derartige Reste R⁵ können von (Meth)-acrylsäure abgeleitete Anteile und eine lange Alkylkette aufweisen. Diese Ausführungsform ist jedoch nicht bevorzugt.

Erfindungsgemäße Polyorganosiloxane können als bei Raumtemperatur (25°C) flüssige Verbindungen mit einer hohen Viskosität vorliegen. In Abhängigkeit von u.a. der Länge der Siloxankette (d.h. Summe der SiO-Einheiten, Summe (m+o+q+2), ab etwa 30), der Länge des Kohlenwasserstoffanteils R² (ab etwa 20 Kohlenstoffatome) und der Zahl der Kohlenwasserstoffanteile R² können die erfindungsgemäßen Polyorganosiloxane bei Raumtemperatur fest sein.

Es ist möglich, das erfindungsgemäße Polyorganosiloxan als Masterbatch einzusetzen, der
a) einen oder mehrere Kautschuke und
b) ein oder mehrere erfindungsgemäße Polyorganosiloxane enthält.

Bevorzugt enthält der Masterbatch 0,5 bis 30 Gewichtsteile erfindungsgemäßes Polyorganosiloxan, bevorzugter 0,5 bis 20 Gewichtsteile und insbesondere 0,5 bis 10 Gewichtsteile Polyorganosiloxan, bezogen auf 100 Gewichtsteile Kautschuk (phr, parts per hundred parts rubber). Typischerweise werden in dem Masterbatch als Kautschuke peroxidisch vernetzbare Typen wie beispielsweise Naturkautschuk (NR), Polybutadien (BR), Acrylnitril-Butadien-Kautschuk (NBR, HNBR), Ethylen-Propylen-Kautschuk (EPM, EPDM), chloriertes oder chlorsulfoniertes Polyethylen (CM, CSM), Terpolymere des Epichlorhydrin-Kautschuks (GECO), Fluorkautschuke (FKM, FFKM, TFE/P), Acrylatkautschuke (ACM, AEM), Ethylen-Vinylacetat-Kautschuk (EVA, EVM), Silikonkautschuk (VMQ, PMQ, PVMQ, FVMQ), Polyoctenamer (Vestenamer), Polyurethan-Kautschuk oder thermoplastische Elastomere (TPE) verwendet.

Der Einsatz eines Masterbatch erleichtert die Einarbeitung des erfindungsgemäßen Polyorganosiloxans in einen Kautschuk.

Darüber hinaus ist es möglich, das erfindungsgemäße Polyorganosiloxan in Form einer Abmischung einzusetzen, die
a) ein oder mehrere feste Trägermaterialien (vorzugsweise ausgewählt aus anorganischen Füllstoffen (wie beispielsweise Kieselsäure) oder wachsartigen Materialien (wie beispielsweise Polyethylenwachse)) und
b) ein oder mehrere erfindungsgemäße Polyorganosiloxane enthält.

Das Gewichtsverhältnis von a) Trägermaterial zu b) erfindungsgemäßem Polyorganosiloxan in der Abmischung beträgt vorzugsweise 10/90 bis 90/10, bevorzugter 20/80 bis 80/20 und besonders bevorzugt etwa 60/40. Bevorzugte Materialien für Abmischungen sind Kieselsäuren oder andere anorganische Füllstoffe wie beispielsweise Kreide oder wachsartige Materialien wie beispielsweiser Polyethylenwachse.

Der Einsatz einer Abmischung erleichtert insbesondere die Handhabung der erfindungsgemäßen Polyorganosiloxane, wenn diese bei Raumtemperatur flüssig sind.

### 4. Verfahren zur Herstellung erfindungsgemäßer Polyorganosiloxane

Bei einem bevorzugten Verfahren zur Herstellung der erfindungsgemäßen Polyorganosiloxane wird
a) ein Polyorganosiloxan, dass zwei oder mehr SiH-Gruppen aufweist, mit einer Verbindung umgesetzt, die mindestens eine Gruppe R¹ aufweist, um ein Polyorganosiloxan mit mindestens einer Gruppe R¹ und einer oder mehreren verbliebenen SiH-Gruppen zu erhalten, und
b) das in Schritt a) erhaltene Polyorganosiloxan mit einem α-Olefin umgesetzt, um ein erfindungsgemäßes Polyorganosiloxan zu erhalten.

Bei einem alternativen Verfahren zur Herstellung der erfindungsgemäßen Polyorganosiloxane wird
a) ein Silan, das eine oder mehrere hydrolysierbare Gruppen besitzt, mit einer Gruppe R¹ funktionalisiert,
b) ein Silan, das eine oder mehrere hydrolysierbare Gruppen besitzt, mit einer Gruppe R² funktionalisiert,
c) die in Schritt a) erhaltende Verbindung mit der in Schritt b) erhaltenen Verbindung zusammen mit einer das Siloxan-Grundgerüst liefernden Verbindung, wie Octamethylcyclotetrasiloxan, unter basischen Bedingungen in Wasser umgesetzt.

### 5. Verwendung und Vulkanisationsverfahren

Die Polyorganosiloxane werden erfindungsgemäß vorzugsweise bei der Verarbeitung von Kautschuk eingesetzt, beispielsweise zur Verbesserung des Releaseverhaltens auf dem Walzwerk bzw. im Innenmischer, Verringerung der Mooney-Viskosität, Erhöhung des Moduls der vulkanisierten Kautschukmischung, Zugfestigkeit, Verringerung des Druckverformungsrestes, Verringerung der Reißdehnung und/oder Verringerung des Weiterreißwiderstands.

Bevorzugt ist der Kautschuk bzw. die Kautschukphase peroxidisch vulkanisierbar. Beispielsweise können Naturkautschuk (NR), Polybutadien (BR), Acrylnitril-Butadien-Kautschuk (NBR, HNBR), Ethylen-Propylen-Kautschuk (EPM, EPDM), Chloriertes oder chlorsulfoniertes Polyethylen (CM, CSM), Terpolymere des Epichlorhydrin-Kautschuks (GECO), Fluorkautschuke (FKM, FFKM, TFE/P), Acrylatkautschuke (ACM, AEM), Ethylen-Vinylacetat-Kautschuk (EVA, EVM), Silikonkautschuk (VMQ, PMQ, PVMQ, FVMQ), Polyoctenamer (Vestenamer), Polyurethan-Kautschuk oder thermoplastische Elastomere (TPE). Vorzugsweise wird das erfindungsgemäße Polyorganosiloxan jedoch nicht bei Silikonkautschuk eingesetzt.

Besonders bevorzugt sind EPM, EPDM, CSM, FPM, IR, BR, CR, AEM, EVM, EVA, NBR und HNBR, wobei wie erwähnt auch Mischungen der genannten Kautschuktypen eingesetzt werden können.

Eine typische Menge erfindungsgemäß eingesetztes Polyorganosiloxan beträgt 0,1 bis 50 Gewichtsteile pro 100 Gewichtsteile Kautschuk(mischung) (phr, parts per hundred parts rubber), vorzugsweise 0,5 bis 20 phr, insbesondere 1 bis 10 phr, wie 2 bis 8 phr, beispielsweise etwa 4 phr.

Die Erfindung betrifft darüber hinaus ein Verfahren zur Vulkanisation von Kautschuk, bei dem eine Vulkanisationsmischung, die
(i) ein oder mehrere peroxidisch vernetzbare Kautschuke (wie beispielsweise NR, BR, NBR, HNBR, EPM, EPDM, CM, CSM, GECO, FKM, FFKM, TFE/P, ACM, AEM, EVA, EVM, VMQ, PMQ, PVMQ, FVMQ oder TPE),
(ii) ein oder mehrere peroxidische Vulkanisationsmittel und
(iii) ein oder mehrere erfindungsgemäße Polyorganosiloxane enthält,
bei einer Temperatur von beispielsweise 120°C bis 250°C peroxidisch vulkanisiert wird.

Eine Vulkanisationsmischung enthält vorzugsweise ferner Zuschlagstoffe wie Füllstoffe (beispielsweise Ruß, Kieselsäure, Calciumcarbonat, Bariumsulfat, Zinkoxid, Magnesiumoxide, Aluminiumoxide, Eisenoxide, Silikate), Weichmacheröle (beispielsweise Mineralöle), Alterungsschutzmittel, Vulkanisationshilfsmittel Peroxid, weitere Vulkanisationshilfsmittel (beispielsweise Schwefel), und Flammschutzmittel (beispielsweise Aluminiumhydroxid, Magnesiumhydroxid, Calciumhydroxid oder Phosphorverbindungen) in üblichen Mengen.

Durch die Vulkanisation, bei der die reaktive Vernetzung der erfindungsgemäßen Polyorganosiloxane über den ungesättigten Anteil R¹ erfolgt, wird auch der Kohlenwasserstoffanteil R² chemisch in den Kautschuk eingebunden. Somit wird die Vernetzung der peroxidisch vulkanisierbaren Kautschukmischungen verbessert und darüber hinaus mittels Viskositätssenkung deren Weiterverarbeitbarkeit verbessert. Durch die Vereinigung von zwei funktionellen Gruppen in einem Polyorganosiloxan wird ein unerwünschter Verdünnungseffekt vermieden.

### Beispiele

### (i) Herstellung von Polyorganosiloxanen

### Polyorganosiloxan A:

In einer ersten Reaktionsstufe wurden in einem Dreihalskolben 43,74 g (0,017 mol) Polyhydrogenmethylsiloxan, 34,00 g (0,209 mol) Hexamethyldisiloxan und 622,26 g (2,095 mol) Octamethylcyclotetrasiloxan unter einem säureaktivierten Calcium-Bentonit-Katalysator (3%) zu einem Methylhydrogendimethylpolysiloxan umgesetzt. Dieses Methylhydrogendimethylpolysiloxan wies die folgende durchschnittliche Zusammensetzung auf:

M₂D^{H}₃D₃₇,

das heißt von den Siliziumatomen der insgesamt (durchschnittlich) 42 Siloxaneinheiten in der Verbindung sind (durchschnittlich) drei mit jeweils einem Wasserstoffatom substituiert (D^{H}) und der nachfolgenden Funktionalisierung zugänglich. In dieser Verbindung sind ferner (durchschnittlich) zwei monofunktionelle (endständige) Trimethylsiloxaneinheiten M und (durchschnittlich) 37 difunktionelle Dimethylsiloxaneinheiten D enthalten.

In der zweiten Reaktionsstufe wurden 40,9 g (0,162 mol) 1-Octadecen und 15,91 g (10% der Einwaage - 0,005 mol) des in der ersten Stufe hergestellten Methylhydrogendimethylpolysiloxan auf 60°C erwärmt. Anschließend erfolgte die Zugabe des Katalysators (10 ppm Karstedt-Katalysator) und die restlichen 143,19 g (0,046 mol) des Methylhydrogendimethylpolysiloxans wurden langsam zugetropft. Die Reaktion lief bei 95°C ab und wurde über eine infrarotspektroskopische HSi-Messung überwacht. Nachdem kein HSi mehr messbar und die Reaktion demzufolge abgeschlossen war, erfolgte eine Destillation überschüssiger Bestandteile.

### Polyorganosiloxan B:

In einer ersten Reaktionsstufe wurden in einem Dreihalskolben 148,58 g (0,059 mol) Polyhydrogenmethylsiloxan, 37,29 g (0,230 mol) Hexamethyldisiloxan und 514,13 g (1,731 mol) Octamethylcyclotetrasiloxan unter einem säureaktivierten Calcium-Bentonit-Katalysator (3%) zu einem Methylhydrogendimethylpolysiloxan umgesetzt. Dieses Methylhydrogendimethylpolysiloxan wies die folgende durchschnittliche Zusammensetzung auf:

M₂D^{H}₈D₂₄.

das heißt von den Siliziumatomen der insgesamt (durchschnittlich) 34 Siloxaneinheiten in der Verbindung sind (durchschnittlich) 8 mit jeweils einem Wasserstoffatom substituiert (D^{H}) und einer nachfolgenden Funktionalisierung zugänglich.

In der zweiten Reaktionsstufe wurden 38,96 g (0,309 mol) Allylmethacrylat unter Zugabe eines Inhibitors (Butylhydroxytoluol 0,1%) auf 60°C erwärmt. Anschließend erfolgte die Zugabe des Katalysators (10 ppm Karstedt-Katalysator), und dann wurden langsam 124,72 g (0,051 mol) des in der ersten Stufe hergestellten Methylhydrogendimethylpolysiloxans bei einer maximalen Temperatur von 70°C zugetropft. Anschließend erfolgte die langsame Zugabe von 36,32 g (0,144 mol) 1-Octadecen bei 60°C. Die danach stattfindende Reaktion lief bei 80°C ab und wurde über eine infrarotspektroskopische HSi-Messung überwacht. Nachdem kein HSi mehr messbar, also die Reaktion abgeschlossen war, erfolgte eine Destillation überschüssiger Bestandteile.

### Polyorganosiloxan C:

In einem ersten Reaktionsschritt wurde wie für Polyorganosiloxan B beschrieben ein Methylhydrogendimethylpolysiloxan mit der durchschnittlichen Zusammensetzung:

M₂D^{H}₈D₂₄,

hergestellt.

In der zweiten Reaktionsstufe wurden 52,06 g (0,413 mol) Allylmethacrylat und 16,4 g (0,065 mol) 1-Octadecen unter Zugabe eines Inhibitors (Butylhydroxytoluol 0,1%) auf 60°C erwärmt. Anschließend erfolgten die Zugabe des Katalysators (10 ppm Karstedt-Katalysator) und eine langsame Zugabe von 131,54 g (0,054 mol) des genannten Methylhydrogendimethylpolysiloxans. Die danach stattfindende Reaktion lief bei 95°C ab und wurde über eine infrarotspektroskopische HSi-Messung überwacht. Nachdem kein HSi mehr messbar, also die Reaktion abgeschlossen war, erfolgte eine Destillation überschüssiger Bestandteile.

### Polyorganosiloxan D:

In einer ersten Reaktionsstufe wurden in einem Dreihalskolben 71,69 g (0,029 mol) Polyhydrogenmethylsiloxan, 47,29 g (0,291 mol) Hexamethyldisiloxan und 581,21 g (1,957 mol) Octamethylcyclotetrasiloxan unter einem säureaktivierten Calcium-Bentonit-Katalysator (3%) zu einem Methylhydrogendimethylpolysiloxan umgesetzt. Dieses Methylhydrogendimethylpolysiloxan wies die folgende (durchschnittliche) Zusammensetzung auf:

M₂D^{H}_{3,5}D₂₄,

das heißt von den Siliziumatomen der insgesamt (durchschnittlich) 29,5 Siloxaneinheiten in der Verbindung sind (durchschnittlich) 3,5 mit jeweils einem Wasserstoffatom substituiert (D^{H}) und einer nachfolgenden Funktionalisierung zugänglich.

In der zweiten Reaktionsstufe wurden 28,68 g (0,227 mol) Allylmethacrylat, 12,72 g (0,050 mol) 1-Octadecen und 15,86 g (10% der Einwaage - 0,007 mol) des in der ersten Stufe hergestellten Methylhydrogendimethylpolysiloxans unter Zugabe eines Inhibitors (Butylhydroxytoluol 0,1%) auf 60°C erwärmt. Anschließend erfolgte die Zugabe des Katalysators (10 ppm Karstedt-Katalysator) und es wurden die restlichen 142,74 g (0,066 mol) des Methylhydrogendimethylpolysiloxans langsam zugetropft. Die stattfindende Reaktion lief bei 95°C ab und wurde über eine infrarotspektroskopische HSi-Messung überwacht. Nachdem kein HSi mehr messbar, also die Reaktion abgeschlossen war, erfolgte eine Destillation überschüssiger Bestandteile.

Die Polyorganosiloxane A bis D sind nicht endständig funktionalisiert, sondern die Funktionalisierung mit Methacrylat- beziehungsweise n-Octadecylgruppen befindet sich - statistisch verteilt - in difunktionellen Siloxaneinheiten, deren Siliziumatome eine Methacrylat- beziehungsweise n-Octadecylgruppe und eine Methylgruppe tragen. Die (durchschnittliche) Funktionalisierung der Polyorganosiloxane A bis D ist in der folgenden Tabelle 1 wiedergegeben:

**Tabelle 1**

| Polyorganosiloxan | Funktionalisierung ^{a)} | Methacrylat-Funktionalisierung, % ^{b)} | n-Octadecyl-Funktionalisierung, % ^{b)} |
|---|---|---|---|
| A | 3/42 | 0^{c)} | 100 (7,1) |
| B ^{d)} | 8/34 | 75 (17,6) | 25 (5,9) |
| C ^{d)} | 8/34 | 95 (22,4) | 5 (1,2) |
| D ^{d)} | 3,5/29,5 | 95 (11,3) | 5 (0,6) |

| | | | |
|---|---|---|---|
| a) angegeben sind die Zahl der funktionalisierten dirunktionellen Siloxaneinheiten/die Gesamtzahl der Siloxaneinheiten. b) bezogen auf die Gesamtzahl der funktionalisierten Siloxaneinheiten (bezogen auf die Gesamtzahl der Siloxaneinheiten). c) ohne vernetzbare Funktionalität. d) Erfindungsgemäß. | | | |

### (ii) Herstellung von Vulkanisationsmischungen

Eine Mischung, bestehend aus 100 Gewichtsteilen EPM-Kautschuk (Keltan 740), 100 phr kalziniertes Kaolin (Polestar 200 R) und 30 phr paraffinisches Mineralöl (Sunpar 2280) wurde im Upsidedown-Mischverfahren hergestellt.

Anschließend wurde der Ansatz in 5 gleiche Gewichtsteile aufgeteilt und auf dem Walzwerk Peroxid und Additive aufgemischt. Zu einem Gewichtsteil wurden nur 8 phr Peroxid (Trigonox 101-45B-pd) gegeben (Kontrolle/Blindprobe). Den vier weiteren Gewichtsteilen wurden jeweils 8 phr Peroxid (Trigonox 101-45B-pd) sowie 4 phr bestimmter Polyorganosiloxane mit einem Walzwerk aufgemischt. Das in den Vulkanisationsmischungen eingesetzte Polyorganosiloxan und die Mooney-Viskosität der Vulkanisationsmischung sind in Tabelle 2 angegeben.

**Tablette 2**

| Vulkanisationsmischung | Polyorganosiloxan | Mooney-Viskosität ^{d)} |
|---|---|---|
| 1 ^{a)} | - | 71 |
| 2 ^{b)} | A | 67 |
| 3 ^{c)} | B | 64 |
| 4 ^{c)} | C | 63 |
| 5 ^{c)} | D | 64 |

| | | |
|---|---|---|
| a) Vergleich: Vulkanisationsmischung ohne Polyorganosiloxan (Blindprobe). b) Vergleich: ohne vernetzbare Funktionalität. c) Erfindungsgemäß. d) DIN 53523 Teil 3: Prüfung von Kunststoffen und Elastomeren; Prüfung mit dem Scherscheiben-Viskosimeter nach Mooney, Bestimmung der Viskosität nach Mooney. | | |

Am Beispiel der Mooney-Viskosität ist damit belegt, dass sich durch die erfindungsgemäß funktionalisierten Polyorganosiloxane eine Verbesserung der Verarbeitungseigenschaften ergibt, wobei die Funktionalisierung mit der ungesättigten Funktionalität R¹ überraschenderweise zu dieser Verbesserung beiträgt.

### (iii) Herstellung von Vulkanisaten

Aus den Vulkanisationsmischungen 1 bis 5 wurden Prüfplatten von 2 mm und 6 mm Dicke hergestellt, die etwa 20 min lang bei 180°C vulkanisiert wurden. Die erhaltenen Prüfkörper 1 bis 5 zeigten die in Tabelle 3 gelisteten Eigenschaften.

**Tabelle 3**

| | Reißdehnung⁽¹⁾ | Modul 100%⁽¹⁾ | Modul 300%⁽¹⁾ | Modul 500%⁽¹⁾ | Druckverformungsrest⁽²⁾ | Weiterreißwiderstand⁽³⁾ |
|---|---|---|---|---|---|---|
| 1 | 884 | 1,5 | 3,0 | 3,7 | 29,2 | 13,2 |
| 2 | 881 | 1,3 | 2,3 | 2,8 | 30,7 | 12,8 |
| 3 | 736 | 1,5 | 4,1 | 5,2 | 23,5 | 11,6 |
| 4 | 751 | 1,7 | 4,1 | 5,2 | 20,6 | 10,2 |
| 5 | 855 | 1,7 | 3,3 | 4,2 | 25,7 | 12,1 |

| | | | | | | |
|---|---|---|---|---|---|---|
| (1) DIN 53504: Prüfung von Kunststoffen und Elastomeren; Bestimmung von Reißfestigkeit, Zugfestigkeit, Reißdehnung und Spannungswert im Zugversuch. Modulwerte in MPa. (2) DIN ISO 815: Bestimmung des Druckverformungsrestes bei Umgebungs-, erhöhten und niedrigen Temperaturen: 22 h/75°C/25%. (3) DIN ISO 34-1: Elastomere oder thermoplastische Elastomere - Bestimmung des Weiterreißwiderstandes. | | | | | | |

Die Werte für Modul und Druckverformungsrest in Tabelle 3 belegen, dass sich durch die erfindungsgemäße Funktionalisierung zum Teil eine deutliche Verbesserung der mechanischen Werte ergibt, wenn der Kautschuk unter Einsatz der erfindungsgemäßen Polyorganosiloxane vulkanisiert wird.

Die Reißdehnung korrespondiert erwartungsgemäß mit den Modul-Werten. Durch die Erhöhung der Vernetzungsdichte mittels der erfindungsgemäßen Polyorganosiloxane werden erwartungsgemäß für die aus den Mischungen 3, 4 und 5 erhaltenen Prüfkörper niedrigere Werte für die Reißdehnung ermittelt, gleichzeitig steigen die Modulwerte. In dem aus Mischung 5 erhaltenen Prüfkörper fällt die Verringerung relativ niedrig aus, da der Anteil an vernetzbaren Gruppen in dem verwendeten Polyorganosiloxan mit 10,9% bzw. 3,3 Einheiten pro Polymerkette relativ niedrig ist.

## Patentansprüche

1. Polyorganosiloxan mit 3 oder mehr Siloxaneinheiten, das
(i) einen oder mehrere organische Anteile R¹, wobei R¹ eine oder mehrere Kohlenstoff-Kohlenstoff-Mehrfachbindungen besitzt, und
(ii) einen oder mehrere Kohlenwasserstoffanteile R² aufweist, wobei R² eine Kettenlänge von 5 bis 50 Kohlenstoffatomen besitzt.

2. Polyorganosiloxan nach Anspruch 1, **dadurch gekennzeichnet, dass** die Kohlenstoff-Kohlenstoff-Mehrfachbindung des Anteils R¹ eine Doppelbindung ist.

3. Polyorganosiloxan nach Anspruch 1 oder 2, **dadurch gekennzeichnet, dass** der organische Anteil R¹ ein einwertiger Rest ist.

4. Polyorganosiloxan nach Anspruch 3, **dadurch gekennzeichnet, dass** der Rest R¹ (x), (y) oder (z) ist:

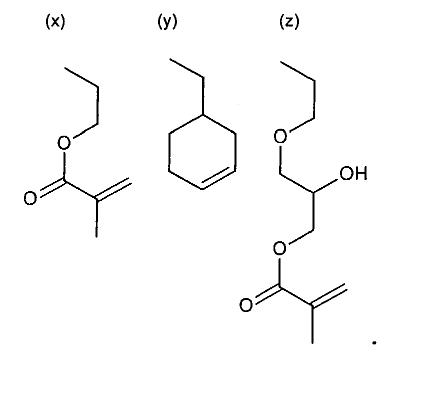

5. Polyorganosiloxan nach einem der vorhergehenden Ansprüche, **dadurch gekennzeichnet, dass** das Polyorganosiloxan die Struktureinheit I aufweist
[R¹ₓRₐSiO_{[4}-₍ₓ₊ₐ)_{]/2}] (I),
wobei x gleich 1, 2 oder 3 und vorzugsweise 1 ist, a gleich 0, 1 oder 2, vorzugsweise 1 oder 2 und insbesondere 1 ist und R ein einwertiger organischer Rest ist, wobei R vorzugsweise ausgewählt ist aus Methyl, Ethyl, Propyl oder Phenyl, und R besonders bevorzugt Methyl ist.

6. Polyorganosiloxan nach einem der vorhergehenden Ansprüche, **dadurch gekennzeichnet, dass** der Kohlenwasserstoffanteil R² ein einwertiger Kohlenwasserstoffrest ist.

7. Polyorganosiloxan nach Anspruch 6, **dadurch gekennzeichnet, dass** der Rest R² ausgewählt ist aus verzweigten oder unverzweigten Alkylgruppen, wie n-C₈- bis C₃₀-Alkyl, vorzugsweise n-C₁₀- bis C₂₆-Alkyl, bevorzugter n-C₁₂- bis C₁₈-Alkyl, wie beispielsweise n-C₁₈-Alkyl.

8. Polyorganosiloxan nach einem der vorhergehenden Ansprüche, **dadurch gekennzeichnet, dass** das Polyorganosiloxan die Struktureinheit II aufweist
[R²_{y}R'_{b}O_{[4-(x+a)]/2}] (II),
wobei y gleich 1, 2 oder 3 und vorzugsweise 1 ist, b gleich 0, 1 oder 2, vorzugsweise 1 oder 2 und insbesondere 1 ist, und R' ein einwertiger organischer Rest ist, wobei R' vorzugsweise ausgewählt ist aus Methyl, Ethyl, Propyl oder Phenyl, und R' besonders bevorzugt Methyl ist.

9. Polyorganosiloxan nach in der vorhergehenden Ansprüche, **dadurch gekennzeichnet, dass** das Polyorganosiloxan die folgende Struktur besitzt:
[I^{D}]ₘ[I^{M}]ₙ[II^{D}]ₒ[II^{M}]ₚ[III^{D}]_{q}[[IV^{M}]₍₂₋ₙ₋ₚ₎,
wobei
(i) m und o unabhängig voneinander im Bereich von 0 bis 40 liegen und n und p unabhängig voneinander 0, 1 oder 2 sein können,
- mit der Maßgabe, dass die Summe (m + n) mindestens 1 beträgt und die Summe (o + p) mindestens 1 beträgt,
- mit der weiteren Maßgabe, dass die Summe (n + p) höchstens 2 ist,
- wobei die Summe (m + n + o + p) vorzugsweise im Bereich bis 20 liegt, und
(ii) q im Bereich von 0 bis 100 liegt,
(iii) [I^{D}] die difunktionelle Struktureinheit [R¹RSiO_{2/2}] bedeutet, wobei R ein einwertiger organischer Rest ist, vorzugsweise Methyl,
(iv) [I^{M}] die monofunktionelle Struktureinheit [R¹R₂SiO_{1/2}] bedeutet, wobei R ein einwertiger organischer Rest ist, vorzugsweise Methyl,
(v) [II^{D}] die difunktionelle Struktureinheit [R²R'SiO_{2/2}] bedeutet, wobei R' ein einwertiger organischer Rest ist, vorzugsweise Methyl,
(vi) [II^{M}] die monofunktionelle Struktureinheit [R²R'₂SiO_{1/2}] bedeutet, wobei R' ein einwertiger organischer Rest ist, vorzugsweise Methyl,
(vii) [III^{D}] die difunktionelle Struktureinheit [R''₂SiO_{2/2}] bedeutet, wobei die Reste R'' gleich oder verschieden sind und ein organischer Rest sind, vorzugsweise Methyl,
(viii) [IV^{M}] die monofunktionelle Struktureinheit [R'''₃SiO_{1/2}] bedeutet, wobei die Reste R"' gleich oder verschieden sind und ausgewählt sind aus Hydroxy und linearen, verzweigten oder cyclischen organischen Resten, vorzugsweise Hydroxy und Methyl.

10. Polyorganosiloxan nach Anspruch 9, **dadurch gekennzeichnet, dass** n gleich 0 ist.

11. Polyorganosiloxan nach Anspruch 9, **dadurch gekennzeichnet, dass** n gleich 1 oder 2 ist.

12. Polyorganosiloxan nach Anspruch 1, **dadurch gekennzeichnet, dass** der Anteil R¹ an ein anderes Siliziumatom gebunden ist als der Anteil R².

13. Masterbatch, der
a) einen oder mehrere Kautschuke und
b) ein oder mehrere Polyorganosiloxane gemäß einem der Ansprüche 1 bis 12 enthält.

14. Abmischung, die
a) ein oder mehrere feste Trägermaterialien und
b) ein oder mehrere Polyorganosiloxane gemäß einem der Ansprüche 1 bis 12 enthält.

15. Verwendung des Polyorganosiloxans gemäß einem der Ansprüche 1 bis 12 als Additiv bei der Verarbeitung von Kautschuk, wobei das Polyorganosiloxan gegebenenfalls in Form des Masterbatch gemäß Anspruch 13 oder der Abmischung gemäß Anspruch 14 eingesetzt wird.

16. Verwendung nach Anspruch 15, **dadurch gekennzeichnet, dass** das Additiv zur Verbesserung des Releaseverhaltens auf dem Walzwerk bzw. im Innenmischer, Verringerung der Mooney-Viskosität, Erhöhung des Moduls der vulkanisierten Kautschukmischung, Zugfestigkeit, Verringerung des Druckverformungsrestes, Verringerung der Reißdehnung und/oder Verringerung des Weiterreißwiderstands eingesetzt wird.

17. Verwendung nach Anspruch 15 oder 16, **dadurch gekennzeichnet, dass** der Kautschuk ausgewählt ist aus NR, BR, NBR, HNBR, EPM, EPDM, CM, CSM, GECO, FKM, FFKM, TFE/P, ACM, AEM, EVA, EVM, VMQ, PMQ, PVMQ, FVMQ und TPE.

18. Verfahren zur Vulkanisation von Kautschuk, bei dem eine Vulkanisationsmischung, die
(i) ein oder mehrere peroxidisch venetzbare Kautschuke,
(ii) ein oder mehrere peroxidische Vulkanisationsmittel und
(iii) ein oder mehrere Polyorganosiloxane gemäß einem der Ansprüche 1 bis 12
enthält, peroxidisch vulkanisiert wird.

19. Vulkanisierter Kautschuk, herstellbar oder hergestellt nach dem Verfahren gemäß Anspruch 18.
